Europäisches Patentamt

European Patent Office

Office européen des brevets

(19)

(11) Numéro de publication : **0 448 892 A2**

# (12) DEMANDE DE BREVET EUROPEEN

(21) Numéro de dépôt : **90403389.1**

(51) Int. Cl.⁵ : **G01F 23/24**

(22) Date de dépôt : **29.11.90**

(30) Priorité : 30.11.89 FR 8915793

(43) Date de publication de la demande :
02.10.91 Bulletin 91/40

(84) Etats contractants désignés :
DE GB IT

(71) Demandeur : JAEGER
2, rue Baudin
F-92303 Levallois-Perret (FR)

(72) Inventeur : Legallic, Lann
20 Rue Michelet
F-93500 Pantin (FR)
Inventeur : Reymond, Philippe
26 rue Georges Boulet
F-91330 Yerres (FR)

(74) Mandataire : Martin, Jean-Jacques et al
Cabinet REGIMBEAU 26, Avenue Kléber
F-75116 Paris (FR)

(54) Détecteur de niveau d'huile dans le carter d'un moteur de véhicule automobile.

(57) La présente invention concerne un détecteur de niveau d'huile dans le carter d'un moteur de véhicule automobile du type comprenant un capteur thermosensible (100) dont la pente de résistivité s'inverse lors du franchissement d'un seuil de température critique, et des moyens d'alimentation (110,112) aptes à appliquer de l'énergie électrique au capteur, caractérisé par le fait qu'il comprend : des moyens (140) aptes à mesurer un paramètre électrique lié à la résistance du capteur, des moyens de temporisation (150) aptes à définir une temporisation (T4) légèrement supérieure au temps (T2-T0) nécessaire au capteur pour atteindre la température critique par auto-échauffement lorsque le capteur (100) est dans l'air, et des moyens (140) aptes à comparer le paramètre électrique mesuré à une valeur de référence (VREF) à la fin de la temporisation (T4).

# FIG_3

EP 0 448 892 A2

## DETECTEUR DE NIVEAU D'HUILE DANS LE CARTER D'UN MOTEUR DE VEHICULE AUTOMOBILE

La présente invention concerne le domaine des détecteurs de niveau d'huile dans le carter d'un moteur de véhicule automobile.

On a déjà proposé de détecter des niveaux minimum de fluide contenu dans un réservoir à l'aide de capteurs comprenant un élément thermosensible électriquement résistif dont la pente de résistivité s'inverse lors du franchissement d'une température critique.

De tels capteurs sont décrits par exemple dans les documents US-A-3412610 et US-A-4065760.

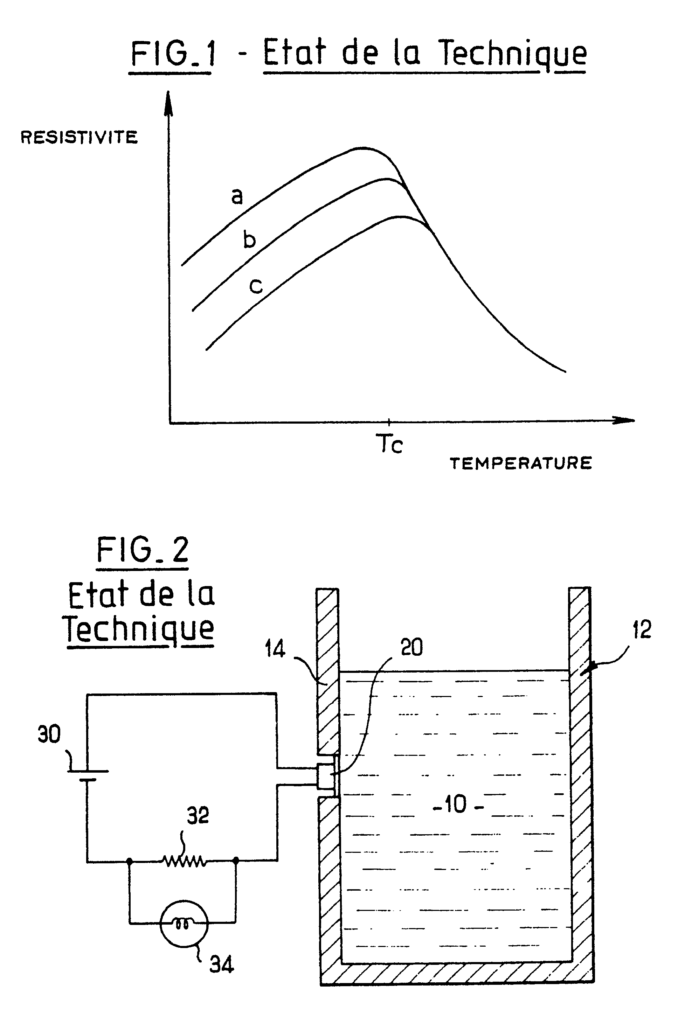

Plus précisément encore, le document US-A-3412610 décrit un dispositif de détection comprenant un composant semi-conducteur présentant comme illustré sur la figure 1 annexée un coefficient de température positif en-dessous d'un seuil de température critique et un coefficient de température négatif en-dessus de ce seuil. La figure 1 représente trois courbes a, b, c, de résistivité d'un tel composant semi-conducteur en fonction de la température, pour trois valeurs de dopage différentes du composant.

Comme représenté sur la figure 2 annexée, le document US-A-3412610 propose d'utiliser le dispositif de détection précité pour surveiller le franchissement d'un niveau prédéterminé par un liquide 10, contenu dans un réservoir 12. Pour cela, selon le document US-A-3412610, le capteur 20 comprenant le composant semi-conducteur à coefficient de température variable est placé dans une paroi 14 du réservoir pour être en relation d'échange thermique avec le liquide 10. Le capteur 20 est placé à la hauteur du niveau à détecter. Le capteur 20 est alimenté par une source de tension 30 par l'intermédiaire d'une résistance série 32. Un témoin 34 est placé en parallèle de la résistance 32.

Lorsque le niveau du fluide 10 est supérieur au niveau du capteur 20, celui-ci est refroidi correctement. La température du capteur 20 reste en dessous du seuil critique. Sa résistance est donc élevée et le courant dans le capteur 20 ainsi que dans la résistance série 32 est faible. Le témoin 34 est donc désactivé.

Lorsque le niveau du fluide 10 devient inférieur au niveau du capteur 20, le fluide 10 ne peut plus refroidir ce dernier. Le capteur 20 est échauffé par effet Joule. Dès que la température critique est atteinte, sa résistance chute; le courant dans le capteur 20 et dans la résistance série 32 augmente rapidement. On obtient un effet d'avalanche. La tension aux bornes de la résistance 32 augmente. Le témoin 34 est activé.

La présente invention a maintenant pour but de proposer un nouveau dispositif de détection conçu tout particulièrement pour détecter un niveau d'huile dans le carter d'un moteur de véhicule automobile.

Le dispositif de détection conforme à la présente invention comprend, de façon connue en soi un capteur thermosensible dont la pente de résistivité s'inverse lors du franchissement d'un seuil de température, et des moyens d'alimentation aptes à appliquer de l'énergie électrique au capteur, et le dispositif est caractérisé selon l'invention par le fait qu'il comprend:

- des moyens aptes à mesurer un paramètre électrique lié à la résistance du capteur,
- des moyens de temporisation aptes à définir une temporisation légèrement supérieure au temps nécessaire au capteur pour atteindre la température critique par auto-échauffement lorsque le capteur est dans l'air, et
- des moyens aptes à comparer le paramètre électrique mesuré à une valeur de référence à la fin de la temporisation.

D'autres caractéristiques, buts et avantages de la présente invention apparaîtront à la lecture de la description détaillée qui va suivre, et en regard des dessins annexés, donnés à titre d'exemples non limitatifs et sur lesquels:

– la figure 1 précédemment décrite représente l'évolution connue de résistivité en fonction de la température d'un composant semi-conducteur thermosensible,

– la figure 2 précédemment décrite représente schématiquement la structure d'un dispositif de détection décrit dans le document US-A-3412610,

– les figures 3 et 4 représentent schématiquement deux variantes de réalisation d'un dispositif de détection conforme à la présente invention,

– la figure 5 représente l'évolution de la tension aux bornes du capteur selon diverses conditions d'utilisation qui seront explicitées par la suite, et

– les figures 6 et 7 représentent schématiquement deux autres variantes de réalisation du dispositif de détection conforme à la présente invention.

Comme indiqué précédemment le détecteur conforme à la présente invention utilise un capteur 100 comprenant un composant semi-conducteur thermosensible dont la pente de résistivité s'inverse lors du franchissement d'un seuil de température critique. Le capteur 100 peut être avantageusement du type décrit dans les documents antérieurs précités US-A-3412610 et US-A-4065760. Bien entendu, le capteur 100 peut encore être formé de tous moyens équivalents connus de l'homme de l'art.

Plus précisément encore, de préférence, selon l'invention, le capteur 100 comprend un composant semi-conducteur présentant un coefficient de température positif en dessous d'un seuil de température critique et un coefficient de température négatif au dessus de ce seuil.

Le capteur 100 est placé dans la paroi du carter contenant l'huile à détecter. Le capteur 100 doit être placé dans la paroi précitée du capteur, selon une disposition telle qu'il soit en relation d'échange thermique avec l'huile à détecter. Ces dispositions connues en soi, et illustrées schématiquement sur la figure 2 par exemple ne seront pas décrites plus en détail par la suite.

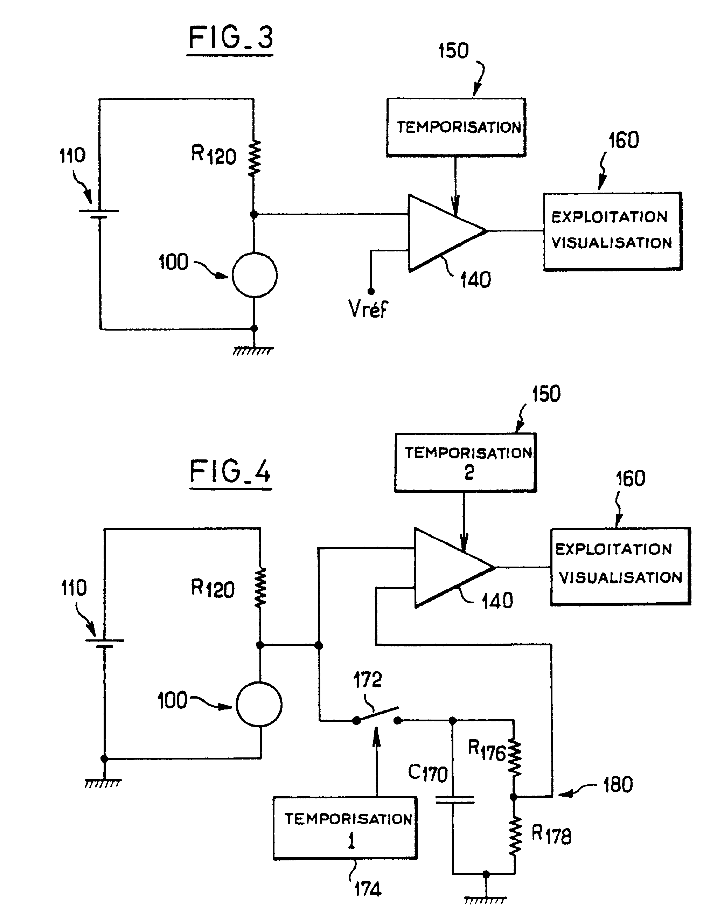

Selon la représentation donnée sur la figure 3, le capteur 100 est alimenté par une source de tension continue 110, par exemple la batterie du véhicule automobile, par l'intermédiaire d'une résistance série R120. La résistance série R120 englobe la résistance interne de la source 110. La valeur de la résistance série R120 est inférieure à la valeur de la résistance du capteur 100 à la température critique Tc.

Le dispositif de détection conforme à l'invention comprend en outre, comme représenté sur la figure 3, un comparateur 140 apte à mesurer la tension aux bornes du capteur 100 et à comparer la tension ainsi mesurée à une valeur de référence VREF à la fin d'une temporisation définie par des moyens 150. Le résultat de la comparaison disponible à la sortie du comparateur 140 peut être appliqué à des moyens d'exploitation et/ou de visualisation, connus en soi, référencés 160 sur la figure 3.

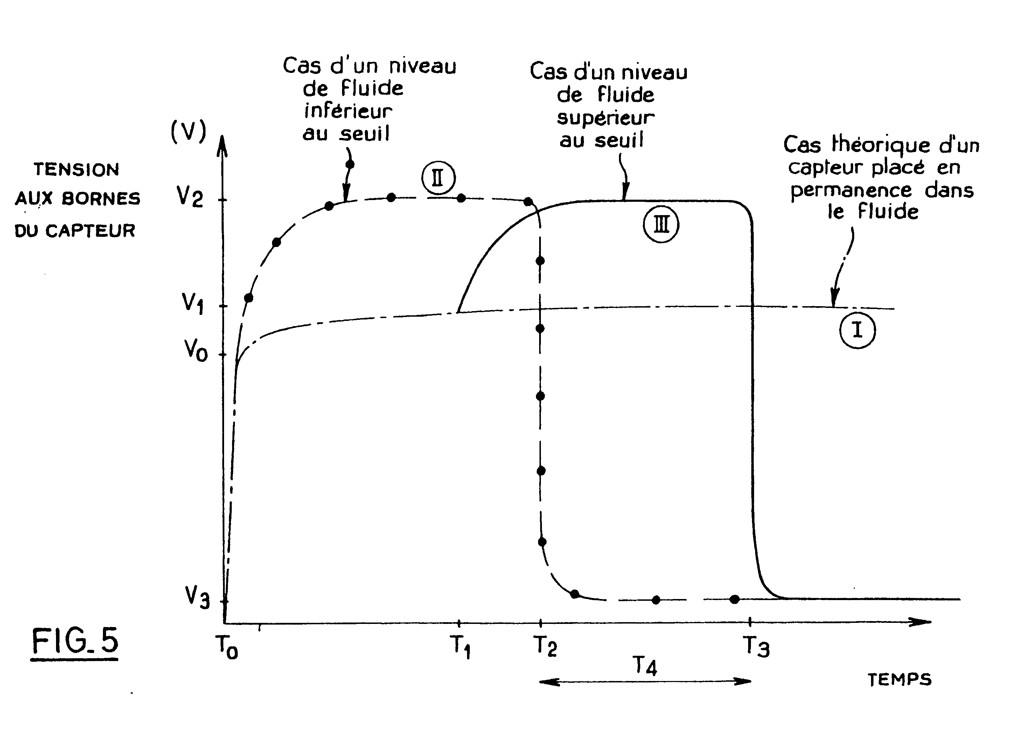

On a représenté en traits mixtes interrompus sur la figure 5 et sous la référence I l'évolution de la tension aux bornes du capteur 100 en fonction du temps, lorsque ce capteur 100 est placé en permanence dans l'huile, c'est-à-dire lorsque le niveau d'huile est en permanence supérieur à la hauteur du capteur 100 dans le réservoir.

La mise sous tension du dispositif est opérée a l'instant $T_0$.

On note qu'après l'instant $T_0$ de mise sous tension, la tension aux bornes du capteur croit rapidement jusqu'à une valeur V0 égale au produit du courant traversant le capteur par la valeur ohmique du capteur à température ambiante. Puis la tension croit légèrement suite à une petite élévation de la résistance du capteur résultant d'un auto-échauffement par effet Joule, pour atteindre une tension d'équilibre V1. Toutefois, le fluide assure un refroidissement important du capteur 100 de sorte que celui-ci ne peut jamais atteindre la température critique d'inversion de sa pente de résistivité.

On a représenté sur la figure 5 et sous la référence II l'évolution de la tension aux bornes du capteur 100 dans le cas où celui-ci n'est pas placé dans l'huile, c'est-à-dire dans le cas où le niveau d'huile est inférieur à la hauteur du capteur 100 dans le réservoir.

A l'origine, la tension aux bornes du capteur croit rapidement à la tension $V_0$ précitée comme dans le cas d'un capteur placé en permanence dans l'huile (courbe I). Toutefois, par la suite, le capteur 100 étant dans l'air, il est moins refroidi. Sa résistance croit plus rapidement que dans le cas I. Par conséquent la tension à ses bornes atteint plus rapidement une tension supérieure V2, jusqu'à atteinte de la température critique de basculement à l'instant T2. On obtient alors un effet d'avalanche, la résistance du capteur décroit rapidement. Il en est de même de la tension à ses bornes qui chute à la valeur V3.

On a enfin représenté sur la figure 5, sous la référence III, l'évolution de la tension aux bornes du capteur 100 dans le cas d'un niveau d'huile initialement supérieur à la hauteur du capteur 100 dans le réservoir, mais avec chute brutale du niveau d'huile à l'instant T1, suite à la mise en service de la pompe à huile du moteur du véhicule.

La demanderesse a constaté qu'à partir de cet instant T1 la tension aux bornes du capteur 100 est pratiquement identique à l'évolution dans le cas d'un capteur constamment en dehors du fluide. A partir de l'instant T1 la courbe III reproduit par conséquent la courbe II avec un décalage temporel égal au temps séparant les instants T0 et T1. On note que sur la figure 5 la tension de la courbe III chute de la valeur V2 à la valeur V3 à l'instant T3.

La présente invention préconise d'opérer la mesure dans l'espace de temps T4 entre les instants T2 et T3.

L'expérience montre en effet que les périodes séparant T2 et T0 d'une part, et T3 et T1 d'autre part, sont régulières, c'est-à-dire présentent peu de dispersion, aisément maitrisables, et sensiblement identiques entre elles.

Les moyens de temporisation 150 précédemment décrits et représentés schématiquement sur la figure 3 sont par conséquent conçus pour générer une temporisation égale à la somme du temps (T2-T0) nécessaire au capteur 100 pour atteindre la température critique par auto-échauffement lorsque le capteur est dans l'air, d'une part et d'une fraction du temps (T1-T0) nécessaire pour assurer la mise en circulation d'huile dans le moteur à partir de l'actionnement de la clef de contact.

Selon la représentation schématique de la figure 3, les moyens de temporisation 150 agissent sur le comparateur 140. Bien entendu, les moyens de temporisation 150 peuvent également agir en amont et/ou en aval du comparateur 140.

La valeur de référence VREF appliquée au comparateur 140 correspond à une fraction de la tension V2 précitée. La tension V2 peut être prédéterminée par mesure de caractéristique de la sonde et imposée par construction. La tension de référence VREF peut encore, comme représentée sur la figure 4, correspondre à une fraction de la tension initiale mesurée aux bornes du capteur 100.

On a représenté en effet sur la figure 4 annexée des moyens aptes à définir une telle tension de référence VREF comprenant un condensateur C170 apte à mesurer la tension aux bornes du capteur 100 lors de la fermeture d'un interrupteur 172 commmandé par des moyens de temporisation 174, après un temps consécutif à la mise sous tension T0 égal à une fraction de (T2-T0), et un pont diviseur R176, R178 connecté en parallèle du condensateur C170 et dont le point médian 180 qui définie le potentiel de référence est appliqué au comparateur 140.

Bien entendu, la représentation des moyens de mémorisation de la valeur initiale de la tension aux bornes du capteur 100 et des moyens diviseurs de la valeur mesurée, donnée sur la figure 4 n'est que schématique.

Pour le reste le schéma de la figure 4 reste identique à celui de la figure 3, c'est-à-dire que la sonde 100 est également alimentée par une source de tension continue 110, par exemple la batterie interne du véhicule automobile, par l'intermédiaire d'une résistance série R120.

Bien entendu la présente invention n'est pas limitée à ces modes de réalisation.

Ainsi par exemple au lieu de mesurer la tension aux bornes du capteur 100, on peut envisager de mesurer la tension aux bornes de la résistance série R120. La tension aux bornes de la résistance série R120 varie de façon inverse de celle aux bornes du capteur 100. Il suffit alors d'adapter le comparateur 140.

Mesurer la tension aux bornes de la résistance série R120 revient en réalité à mesurer le courant traversant le capteur 100.

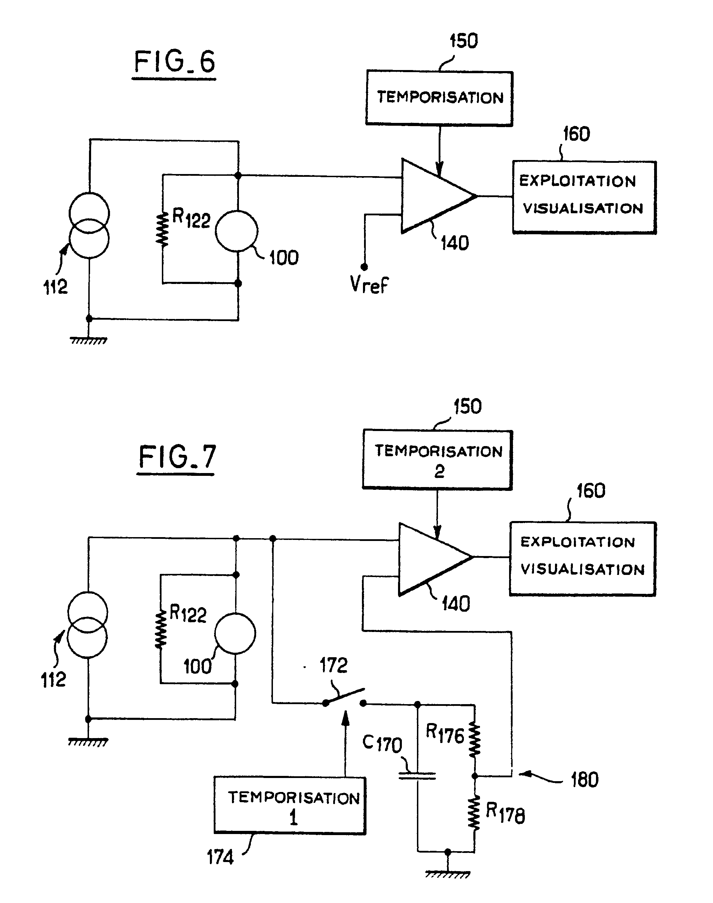

Comme représenté sur les figures 6 et 7 homologues respectivement des figures 3 et 4, on peut également envisager d'alimenter le capteur 100 non pas par une source de tension continue 110, mais par une source de courant 112, en plaçant une résistance R122 en parallèle du capteur 100. Le fonctionnement du dispositif reste identique à celui décrit précédemment en regard des figures 3 et 4.

La demanderesse a déterminé que le temps (T2-T0) peut évoluer légèrement en fonction de la température, pour l'ensemble des capteurs thermosensibles 100. Pour perfectionner le dispositif on peut par conséquent prévoir une temporisation, définie par les moyens 150, évoluant en fonction de la température de l'huile. Pour cela, il suffit d'intégrer dans le circuit de temporisation 150, un deuxième capteur thermosensible placé en permanence dans l'huile et prévu pour cela dans le fond du réservoir.

Selon un mode de réalisation particulier donné à titre d'exemple non limitatif, conforme au mode de réalisation représenté sur la figure 3:

    – le capteur 100 est du type défini dans le document US-A-4065760,

    – la source de tension 110 délivre une tension nominale de 9 à 30 V

    – la résistance série R120 a une valeur de 5 à 25 Ω

    – le temps moyen T2-T0 est de l'ordre de 2,5 s

    – la temporisation définie par les moyens 150 est de l'ordre de : 3 s

De préférence, il est également prévu d'autres moyens de temporisation, non représentés sur les figures, conçus pour couper l'alimentation du capteur après la mesure, pour éviter l'échauffement permanent du capteur.

## Revendications

1. Détecteur de niveau d'huile dans le carter d'un moteur de véhicule automobile du type comprenant un capteur thermosensible (100) dont la pente de résistivité s'inverse lors du franchissement d'un seuil de température critique, et des moyens d'alimentation (110,112) aptes à appliquer de l'énergie électrique au capteur, caractérisé par le fait qu'il comprend:

    – des moyens (140) aptes à mesurer un paramètre électrique lié à la résistance du capteur,

    – des moyens de temporisation (150) aptes à définir une temporisation (T4) légèrement supérieure au temps (T2-T0) nécessaire au capteur pour atteindre la température critique par auto-échauffement lorsque le capteur (100) est dans l'air, et

    – des moyens (140) aptes à comparer le paramètre électrique mesuré à une valeur de référence (VREF) à la fin de la temporisation (T4).

2. Détecteur de niveau d'huile selon la revendication 1, caractérisé par le fait que le capteur (100) présente un coefficient de température positif en dessous du seuil de température critique et un coefficient de température négatif au dessus du seuil de température critique.

3. Détecteur de niveau d'huile selon l'une des revendications 1 ou 2, caractérisé par le fait que les moyens de temporisation (150) définissent une temporisation (T4) égale à la somme du temps (T2-T0) nécessaire au capteur pour atteindre la température critique par auto-échauffement lorsque le capteur est dans l'air et d'une fraction du temps (T1-T0) nécessaire pour assurer la mise en circulation d'huile dans le moteur à partir de l'actionnement de la clef de contact.

4. Détecteur de niveau d'huile selon l'une des revendications 1 à 3, caractérisé par le fait que les moyens d'alimentation (110) sont formés d'une source de tension continue.

5. Détecteur de niveau d'huile selon l'une des revendications 1 à 3, caractérisé par le fait que les moyens d'alimentation (112) sont formés d'une source de courant continue.

6. Détecteur de niveau d'huile selon l'une des revendications 1 à 5, caractérisé par le fait que le paramètre électrique mesuré correspond à la tension aux bornes du capteur (100).

7. Détecteur de niveau d'huile selon l'une des revendications 1 à 5, caractérisé par le fait que le paramètre électrique mesuré correspond au courant dans le capteur (100).

8. Détecteur de niveau d'huile selon l'une des revendications 1 à 5, caractérisé par le fait que le paramètre électrique mesuré correspond à la tension aux bornes d'une résistance (R120) connectée en série du capteur (100).

9. Détecteur de niveau d'huile selon l'une des revendications 1 à 8, caractérisé par le fait que la valeur de référence (VREF) est égale à une fraction de la tension maximum (V2) atteinte par le capteur (100) lorsque celui-ci est dans l'air.

10. Détecteur de niveau d'huile selon l'une des revendications 1 à 9, caractérisé par le fait que la valeur de référence (VREF) appliquée au comparateur (140) est définie à l'aide de moyens (C170) aptes à mémoriser une valeur initiale de la tension aux bornes du capteur (100) et de moyens diviseurs de la valeur mesurée (R176, R178).

11. Détecteur de niveau d'huile selon l'une des revendications 1 à 10, caractérisé par le fait qu'il comprend des moyens de temporisation du capteur après la mesure.

# FIG.1 - Etat de la Technique

# FIG.2
## Etat de la Technique

FIG_3

FIG_4

FIG.5

Cas d'un niveau de fluide inférieur au seuil

Cas d'un niveau de fluide supérieur au seuil

Cas théorique d'un capteur placé en permanence dans le fluide

(V)

TENSION AUX BORNES DU CAPTEUR

$V_2$

$V_1$

$V_0$

$V_3$

$T_0$  $T_1$  $T_2$  $T_3$

$T_4$

TEMPS

EP 0 448 892 A2

FIG.6

FIG.7